Europäisches Patentamt

European Patent Office

Office européen des brevets

(11) Publication number: **0 121 404**
**B1**

## (12) EUROPEAN PATENT SPECIFICATION

(45) Date of publication of patent specification: **31.05.89**  (51) Int. Cl.⁴: **G 01 N 21/25**

(21) Application number: **84302093.4**

(22) Date of filing: **28.03.84**

(54) A photometric light absorption measuring apparatus.

(30) Priority: **29.03.83 JP 54675/83**

(43) Date of publication of application:
**10.10.84 Bulletin 84/41**

(45) Publication of the grant of the patent:
**31.05.89 Bulletin 89/22**

(84) Designated Contracting States:
**DE FR GB IT NL**

(56) References cited:
**GB-A-2 024 419**
**US-A-3 810 696**
**US-A-4 330 209**
**THE REVIEW OF SCIENTIFIC INSTRUMENTS,**
**vol. 43, no. 3, March 1972, pages 493-496; B.W.**
**HODGSON et al.: "Some characteristics of a**
**pulsed xenon lamp for use as a light source in**
**kinetic spectrophotometry"**
**INDIAN JOURNAL OF CHEMISTRY, vol. 13,**
**December 1975, pages 1297-1299, New Delhi,**
**IN; V. BHUJLE: "Absorptin spectroscopy using**
**single photon counting technique"**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Minekane, Tomiharu c/o Patent**
**Division**
**Tokyo Shibaura Denki K.K. Toshiba Building**
**1-1, Shibaura Minato-ku Tokyo (JP)**

(74) Representative: **Shindler, Nigel et al**
**BATCHELLOR, KIRK & EYLES 2 Pear Tree Court**
**Farringdon Road**
**London EC1R 0DS (GB)**

Courier Press, Leamington Spa, England.

## Description

This invention relates to a photometric light absorption measuring apparatus and in particular to such an apparatus used in performing an automatic biochemical analysis requiring a determination of the concentration of liquid samples contained in a series of reaction cuvettes.

Photometric light absorption measurements are normally made by directly irradiating a reaction cuvette or other transparent receptacle containing a fluid sample to be analysed. The light transmitted through the cuvette is directed to a spectrum dispersing means (see e.g. US—A—4330209) and is separated into a plurality of spectral components to be received by a corresponding radiation detector means.

In a conventional apparatus, a direct current light source, such as a halogen tungsten lamp, is usually used to satisfy the requirement for stable light emission characteristics. However, halogen tungsten lamps pose several serious problems when used as the light source of a photometric light absorption measuring type biochemical analyser.

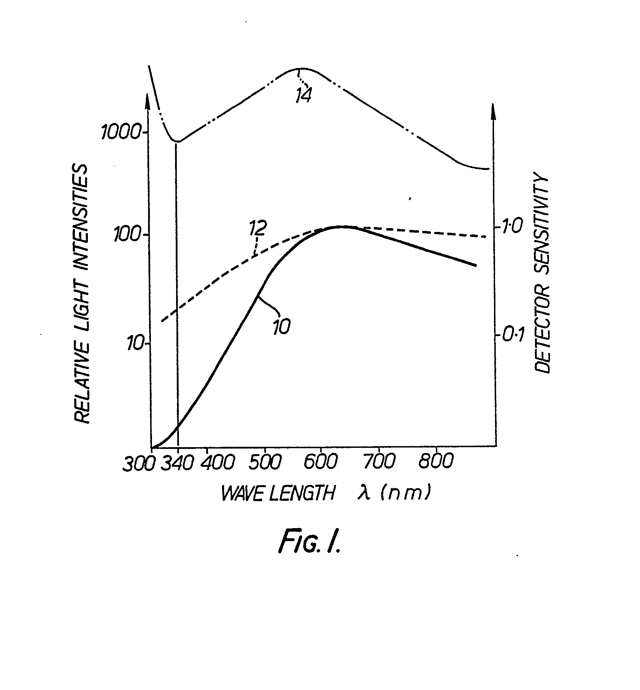

The extremely weak light intensity produced by halogen lamps at ultraviolet wavelengths causes one such problem. Recent developments in the technology of biochemical analysis, for example, the so-called RATE monitoring method which is a continuous monitoring method for the measurement of the catalytic concentration of enzymes, require measuring the light absorption of the samples in the ultraviolet wavelength region, especially around 340 nanometer (nm), of the spectrum. The halogen tungsten lamp intensity in the ultraviolet wavelength region of the spectrum constitutes as little as one-hundredth of the light intensity in the visible wavelength region of the spectrum, as shown by a solid line 10 in Figure 1.

A dotted line 12 in Figure 1 indicates the sensitivity of a state-of-the-art semiconductor detector which uses photodiodes. In accordance with the information depicted in Figure 1, it is apparent that even the latest detector technology is relatively insensitive to light intensity in the ultraviolet region of the spectrum. Consequently, it is impossible to obtain reliable transmission data in the ultraviolet region using halogen tungsten lamps, even when using the newest detectors which have high signal-to-noise ratios. Moreover, since optical fibres lose a significant amount of light energy during the transmission of light therein, the low intensity of halogen tungsten lamps causes additional difficulties if optical fibres are to be used as light guides.

Increasing the power of the halogen tungsten light source offers one solution to the intensity problem. However, increasing the generation power of the halogen tungsten lamp creates an undesirable heat problem.

Increasing the power of halogen tungsten lamp correspondingly increases the thermal influence of the light energy incident on the liquid sample in the cuvette. The thermal influence causes the sample to decompose and results in an inaccurate analysis of the sample.

In order to avoid these problems associated with halogen tungsten lamps, it is known to use xenon-flash-lamps as a light source for analyser see for example U.S. 3,810,696. As shown by a two-dotted line 14 in Figure 1, the light intensity of the xenon-flash-lamp is about one thousand times greater than the intensity of the halogen tungsten lamp at ultraviolet wavelengths. Moreover, even though the xenon-flash-lamp has a very high intensity light emission, it also has a very short flashing time, in the range of several micro-seconds. Consequently, using a xenon-flash-lamp eliminates the analysis inaccuracies introduced by thermal influences on the liquid samples in the cuvettes.

However, despite the intensity advantage, the xenon-flash-lamps pose a serious problem of their own, namely, the fluctuation of light emission which is inevitable in such arc or pulsed lamps. These light emission fluctuations cause inaccurate analysis of the light absorption measurements.

Accordingly, the present invention seeks to provide a new and improved photometric light absorption measuring apparatus that performs extinction, i.e., absorption, analysis with a high degree of accuracy and reliability, especially in the ultraviolet wavelength region.

The invention further seeks to provide an apparatus which is adaptable for use with automatic biochemical analysis and which performs light absorption analysis in the ultraviolet wavelength region with a high degree of accuracy by eliminating thermal influences on the liquid samples in the cuvettes.

The invention also seeks to provide a new and improved photometric light absorption measuring apparatus that is adaptable for use with an automatic biochemical analyser and is capable of using high intensity light emission over the ultraviolet wavelength region of the spectrum without the fluctuation problems of arc or pulsed lamps.

According to the present invention, there is provided apparatus for photometric measurement of the light absorption of liquid samples contained in a series of cuvettes, comprising a light emitting source having high brightness, a power supply for pulsing the light source intermittently a plurality of times to irradiate the sample with a corresponding plurality of pulses of light, spectrometer means for separating each light pulse transmitted through the sample liquid into at least two preselected spectral components, detector means for providing output signals corresponding to the light intensities of the respective preselected spectral components of each light pulse, and arithmetical means for calculating the average mean value for all the light pulses, of the difference between the transmitted light intensities for the two preselected spectral components of each pulse.

The invention will now be described by way of example, with reference to the accompanying drawings, wherein:

Figure 1 shows characteristic curves of the light intensities of halogen tungsten lamp and a xenon-flash-lamp, and the sensitivity of a semiconductor detector means comprising photodiodes.

Figure 2 is a schematic diagram showing an embodiment of the light absorption measuring apparatus of the present invention.

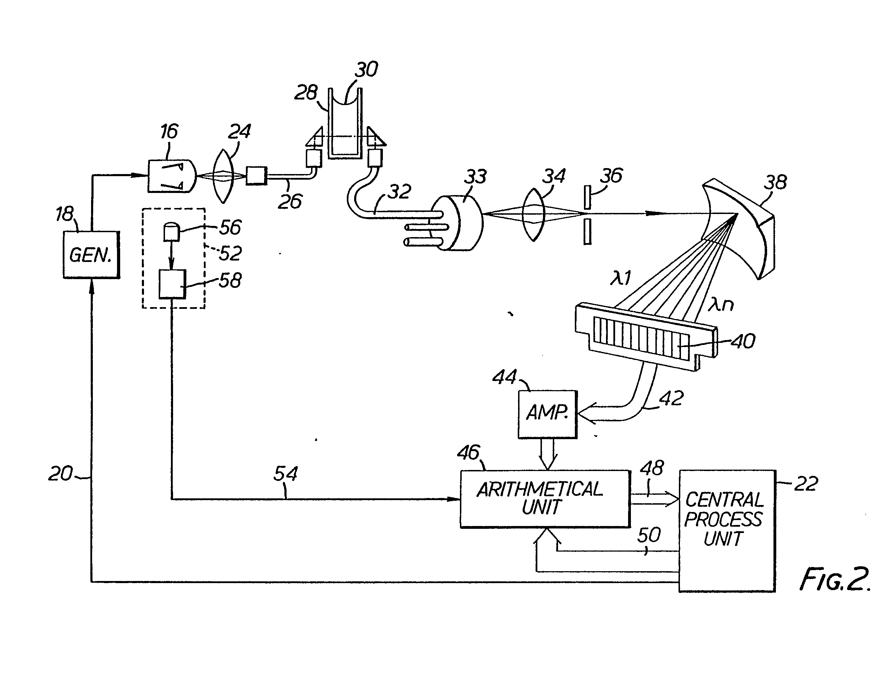

Referring to Figure 2, light from an arc or intermittent pulsed light source 16, such as a xenon-flash-lamp, is intermittently generated by a high power generator 18. Source 16 emits sharp light pulses of high brightness. For example, when generator 18 applies one kilowatt of power to xenon lamp 16, light pulses of 3 micro-seconds in duration are emitted by lamp 16. The light flashing interval, for instance, 12 times every 6 seconds, is controlled by a signal which is sent on a line 20 from a central processing unit 22 to generator 18.

Light emitted from xenon lamp 16 is focused by a focusing lens 24 and is transmitted through at least one optical guide 26 before becoming incident on a transparent receptacle, for example, reaction cuvette 28. Light incident on cuvette 28 is transmitted through a sample 30 to be analysed and the transmitted light is directed consecutively through a second optical guide means 32, a first amplifier 33, a second focusing lens 34 and a slit aperture means 36. The light is then directed to a light dispersing means, such as a diffraction grating 38 of a spectroscope.

Diffraction grating 38 disperses each transmitted intermittent light pulse into a plurality of beams of different wavelengths, $\lambda 1$, $\lambda 2$, ..., $\lambda n$. These monochromatic spectral component light beams are radiated onto the respective position of a radiation detector unit 40, such as a photodiode array unit, which provides a plurality of output signals 42. Each output signal 42 corresponds to the respective light intensity of one of the monochromatic light beams differentiated by grating 38.

Output signals 42 of detector 40 are amplified by and transmitted through a second amplifier means 44 and inputted into an arithmetical unit 46 which uses amplified output signals 42 in combination with other data, described below, to generate output data that is inputted into central processing unit 22 as absorbence data 48.

Arithmetical unit 46 performs several steps to calculate the absorbence of the liquid sample to be examined. First, arithmetical unit 46 receives light flashing frequency data 50, i.e., the number of times source 16 is flashed per unit of time, from central processing unit 22. A misfire detecting means 52 is positioned near light source 16 to detect when the light source fails to flash in response to generator 18. These failures to flash are detected by the misfire detector as a non-flash occurrence of light source 16. The misfire detecting means comprises a misfire detector 56 and a third amplifier 58. Misfire means 52 delivers non-flash data on a line 54 to arithmetical unit 46.

To determine the extinction or absorption of the sample from light transmission intensity output signals 42, initially two different wavelengths i.e., spectral components, are preselected. The selections are made depending upon the sample constituent for which concentration information is desired. For example, two different wavelengths of 340 nm and 380 nm are used for determining GOT (Glutamic-Pyruvic Transaminase); and 550 nm and 630 nm for GLU (Glucose), and so on. To simplify the following explanation, the two preselected wavelengths are referred to as $\lambda 1$ and $\lambda 2$.

A characteristic feature of the present invention is the determination of the light absorption of the liquid sample to be examined by calculating the average of the mean values of the respective differences between the light intensity output signals at the two preselected different wavelengths $\lambda 1$ and $\lambda 2$.

When the light source aimed at sample 30 emits an intermittent light beam pulsed a number (n) of times, the respective transmitted light intensity output signals, $I_1(\lambda 1)$, $I_2(\lambda 1)$, ... $I_n(\lambda 1)$ and $I_1(\lambda 2)$, $I_2(\lambda 2)$, ..., $I_n(\lambda 2)$, for the two preselected wavelengths are generated by radiation detector unit 40 and inputted into the arithmetical unit. Central processing unit 22 delivers light flashing frequency data 50 (in this case the constant number (n)) to arithmetical unit 46 to enable the arithmetical unit to determine the average mean value of the respective differences between the light intensities of the two preselected wavelengths $[E(\lambda 1 - \lambda 2)]$.

Arithmetical unit 46 uses the following equation (1) to calculate the average mean value of the intensity differences between the two preselected wavelengths.

$$1. \quad \frac{1}{n} \left( \log \frac{I_1(\lambda 1)}{I_1(\lambda 2)} + \log \frac{I_2(\lambda 1)}{I_2(\lambda 2)} + \ldots + \log \frac{I_n(\lambda 1)}{I_n(\lambda 2)} \right).$$

$$= \bar{E}(\lambda 1 - \lambda 2). \tag{1}$$

Applying the following Lambert-Beer Law of equation (2) enable the arithmetical unit to calculate the concentration of the sample to be examined where $\varepsilon$ is an absorbence coefficient, C is the concentration of the constituent of interest, and L is the length of the light transmission through the sample.

$$\bar{E}(\lambda 1 - \lambda 2) = \varepsilon CL \tag{2}$$

In order to eliminate inaccuracies which otherwise result from light fluctuations, the light flashing times for each sample are controlled. For example, the light is controlled to flash more than 15 times during every 10 millisecond interval of 100 Hz.

To maintain the accuracy of the average mean value calculated by the arithmetical unit, the times that the light source fails to flash due to misfires are also detected by a misfire detector unit 56. The data taken during the non-flash is eliminated from the data used by the arithmetical unit to calculate the average mean value of the intensity differences $[\overline{E}(\lambda 1 - \lambda 2)]$. For example, suppose the light source is generated so as to flash 20 times against a sample, but actually misfired at the 2nd and 14th signals from the generator so that no flash of light was incident upon the sample. The average mean value of the intensity differences is calculated by the arithmetical unit by summing only the 18 light intensity difference data corresponding to the actual flashes of light source 16. The data taken for the two misfires, namely

$$\log \frac{I_2(\lambda 1)}{I_2(\lambda 2)} \quad \text{and} \quad \log \frac{I_{14}(\lambda 1)}{I_{14}(\lambda 2)},$$

are not used in the calculation by the arithmetical unit.

Equation (1) is best used in the arithmetical unit when relatively high concentrations are to be determined. For the determination of relatively low concentrations, the following equation (3) is also applicable as an alternative.

$$\log \left( \frac{[I_1(\lambda 1) + I_2(\lambda 1) + \ldots + I_n(\lambda 1)]/n}{[I_1(\lambda 2) + I_2(\lambda 2) + \ldots + I_n(\lambda 2)]/n} \right)$$

$$= \overline{E}(\lambda 1 - \lambda 2). \tag{3}$$

**Claims**

1. A photometric light absorption measuring apparatus for analysing a sample (30) contained in a transparent receptacle (28), the apparatus comprising:
   a light source (16) for directing intermittent pulses of light onto the sample (30) contained in the receptacle;
   power supply means (18) for pulsing said light source; characterised by:
   spectroscope means (38) for dispersing each pulse, after transmission through the sample, into at least two components of preselected different wavelengths $(\lambda 1, \lambda 2, \ldots, \lambda n)$;
   detector means (40) for generating intensity signals (42) corresponding to each of said components of the light pulse; and
   an arithmetic unit (46) for determining the absorption of the sample by calculating the average mean value for all the pulses, of the difference between said intensity signals of said two components of each said pulse.

2. A photometric light absorption measuring apparatus according to claim 1, wherein said light source is an arc lamp.

3. A photometric light absorption measuring apparatus according to claim 1, wherein said light source is a xenon-flash-lamp.

4. A photometric light absorption measuring apparatus according to any preceding claim, wherein said power supply is arranged to actuate said light source intermittently more than 15 times.

5. A photometric absorption measuring apparatus according to claim 1 further characterised by:
   second detector means (52) for detecting misfiring of said light source and for generating data signals indicating a misfire condition; and in which the
   arithmetic unit (46) is arranged to receive said light intensity data and said misfire data and to determine the absorbency of the sample by calculating the average mean value of the intensity difference between said preselected different wavelengths; said arithmetic unit being arranged to correct the calculation of the average mean value by excluding intensity data produced during said misfire condition.

6. A biochemical analysing apparatus for analysing samples (30) contained in a series of successive transparent receptacles (28) comprising light absorption apparatus according to any preceding claim, further characterised in that the spectroscope means (38) is arranged to separate each intermittent light beam transmitted through said sample into two preselected different wavelength components 1 and 2 such that each preselected separated component has an intensity $I_1, I_2, \ldots, I_n$ corresponding to each pulse of said light source and in that the detection means (40) generates a signal corresponding to each of said intensities $I_1(\lambda 1), I_2(\lambda 1), \ldots, I_n(\lambda 1)$ and $I_1(\lambda 2), I_2(\lambda 2), \ldots, I_n(\lambda 2)$ of the transmitted intermittent light pulses for each of said two preselected wavelengths 1 and 2; and
   the arithmetic unit (46) receives said light intensity signals from said detection means and determines the absorption of each of said sample to be analysed by calculating the average mean value of the light intensity difference between said two preselected wavelengths using the following relation:

$$\frac{1}{n} \left( \log \frac{I_1(\lambda 1)}{I_1(\lambda 2)} + \log \frac{I_2(\lambda 1)}{I_2(\lambda 2)} + \ldots + \log \frac{I_n(\lambda 1)}{I_n(\lambda 2)} \right).$$

7. A biochemical analysing apparatus for analysing samples (30) contained in a series of successive transparent receptacles (28) comprising light absorption apparatus according to any of claims 1 to 5, further characterised in that the spectroscope means (38) is arranged to separate each intermittent light beam transmitted through said sample into two preselected different wavelength components 1 and 2 such that each preselected separated component has an intensity $I_1, I_2, \ldots, I_n$ corresponding to each pulse of said light source, and in that the detection means (40) generates a signal corresponding to each of said intensities $I_1(\lambda 1), I_2(\lambda 1), \ldots, I_n(\lambda 1)$ and $I_2(\lambda 2), \ldots, I_n(\lambda 2)$ of the transmitted intermittent light pulses for each of said two preselected wavelengths 1 and 2; and

the arithmetic unit (46) receives said light intensity signals from said detection means and determines the absorption of each of said sample to be analysed by calculating the average mean value of the light intensity difference between said two preselected wavelengths using the following relation:

$$\log \left( \frac{[I_1(\lambda 1) + I_2(\lambda 1) + \ldots + I_n(\lambda 1)]/n}{[I_1(\lambda 2) + I_2(\lambda 2) + \ldots + I_n(\lambda 2)]/n} \right).$$

**Patentansprüche**

1. Fotometrische Lichtabsorptionsmeßeinrichtung zur Analysierung einer in einer transparenten Aufnahme (28) enthaltenen Probe (30) mit
—einer Lichtquelle (16), um intermittierende Impulse von Licht auf das in der Aufnahme enthaltene Muster (30) zu richten;
—Stromversorgungsmitteln (18) zum Pulsen der genannten Lichtquelle, gekennzeichnet durch
—Spektroskopmittel (38) zur Aufteilung jedes Impulses nach Übertragung durch die Probe in wenigstens zwei Komponenten vorgewählter unterschiedlicher Wellenlängen ($\lambda 1$, $\lambda 2$, ... $\lambda n$);
—Detektormittel (40) zur Bildung von Intensitätssignalen (42) entsprechend jeder der genannten Komponenten der Lichtimpulse; und
—eine arithmetische Einheit (46) zur Bestimmung der Absorption der Probe durch Berechnung des Gesamtmittelwertes für alle die Impulse der Differenz zwischen den genannten Intensitätssignalen der genannten beiden Komponenten jedes der genannten Impulse.

2. Fotometrische Lichtabsorptionsmeßeinrichtung nach Anspruch 1, dadurch gekennzeichnet, daß die Lichtquelle eine Bogenlampe ist.

3. Fotometrische Lichtabsorptionsmeßeinrichtung nach Anspruch 1, dadurch gekennzeichnet, daß die Lichtquelle eine Xenon-Blitzlampe ist.

4. Fotometrische Lichtabsorptionsmeßeinrichtung nach einem der vorhergehenden Ansprüche, dadurch gekennzeichnet, daß die Stromversorgung so ausgebildet ist, daß sie die genannte Lichtquelle intermittierend mehr als 15 mal in Betrieb setzt.

5. Fotometrische Lichtabsorptionsmeßeinrichtung nach Anspruch 1, weiter gekennzeichnet durch
—zweite Detektormittel (52) zur Feststellung von Zündversagern der genannten Lichtquelle und zur Erzeugung von die Zündfehlbedingung anzeigenden Datensignalen; und worin die
—arithmetische Einheit (46) so angeordnet ist, daß sie die genannten Lichtintensitätsdaten und die genannten Fehlzündungsdaten erhalten und die Absorption der Probe durch Berechnung des Gesamtmittelwertes der Intensitätsdifferenz zwischen den vorgewählten unterschiedlichen Wellenlängen berechnen; wobei die arithmetische Einheit so ausgebildet und angeordnet ist, daß sie die Berechnung des gesamten Mittelwertes durch Weglassen von Intensitätsdaten korrigiert, die während der genannten Fehlzündungslage erzeugt worden sind.

6. Eine biochemische Analyseeinrichtung zum Analysieren von Proben (30), die in einer Reihe aufeinanderfolgender transparenter Aufnahmen (28) enthalten sind, mit einer Lichtabsorptionseinrichtung gemäß einem der vorhergehenden Ansprüche, weiter gekennzeichnet dadurch, daß die Spektroskopmittel (38) so angeordnet und ausgebildet sind, daß sie jeden intermittierenden Lichtstrahl, der durch die genannte Probe übertragen worden ist, in zwei Komponenten 1 und 2 vorgewählter unterschiedlicher Wellenlängen aufteilt, derart, daß jede vorgewählte getrennte Komponente eine Intensität $I_1$, $I_2$, ..., $I_n$ entsprechend jedem Impuls der genannten Lichtquelle hat, und daß die Detektionsmittel (40) ein Signal entsprechend jeder der genannten Intensitäten $I_1(\lambda 1)$, $I_2(\lambda 1)$, ..., $I_n(\lambda 1)$ und $I_1(\lambda 2)$, $I_2(\lambda 2)$, ..., $I_n(\lambda 2)$ des übertragenen intermittierenden Lichtimpulses für jede der beiden vorgewählten Wellenlängen 1 und 2 erzeugt; und

daß die arithmetische Einrichtung (46) die genannten Lichtintensitätssignale von jeder der Detektionsmittel empfängt und die Absorption jeder der genannten zu analysierenden Proben durch Berechnung des Gesamtmittelwertes der Lichtintensitätsdifferenz zwischen den genannten zwei vorgewählten Wellenlängen unter Berücksichtigung der folgenden Beziehung bestimmt:

$$\frac{1}{n} \left( \log \frac{I_1(\lambda 1)}{I_1(\lambda 2)} + \log \frac{I_2(\lambda 1)}{I_2(\lambda 2)} + \ldots + \log \frac{I_n(\lambda 1)}{I_n(\lambda 2)} \right).$$

7. Eine biochemische Analyseeinrichtung zum Analysieren von Proben (30), die in einer Reihe aufeinaderfolgender transparenter Aufnahmen (28) enthalten sind, mit einer Lichtabsorptionseinrichtung gemäß einem der Ansprüche 1 bis 6, weiter gekennzeichnet dadurch, daß die Spektroskopmittel (38) so angeordnet und ausgebildet sind, daß sie jeden intermittierenden Lichtstrahl, der durch die genannte Probe übertragen worden ist, in zwei Komponenten 1 und 2 vorgewählter unterschiedlicher Wellenlängen aufteilen, derart, daß jede vorgewählte getrennte Komponente eine Intensität $I_1$, $I_2$, ..., $I_n$ entsprechend jedem Impuls der genannten Lichtquelle hat, und daß die Detektionsmittel (40) ein Signal entsprechend jeder der genannten Intensitäten $I_1(\lambda 1)$, $I_2(\lambda 1)$, ..., $I_n(\lambda 1)$ und $I_1(\lambda 2)$, $I_2(\lambda 2)$, ..., $I_n(\lambda 2)$ des übertragenen intermittierenden Lichtimpulses für jede der beiden vorgewählten Wellenlängen 1 und 2 erzeugt; und
daß die arithmetische Einrichtung (46) die genannten Lichtintensitätssignale von jedem der Detektionsmittel empfängt und die Absorption jeder der genannten zu analysierenden Proben durch Berechnung des Gesamtmittelwertes der Lichtintensitätsdifferenz zwischen den genannten zwei vorgewählten Wellenlängen unter Berücksichtigung der folgenden Beziehung bestimmt:

$$\log \left( \frac{I_1(\lambda 1) + I_2(\lambda 1) + \ldots + I_n(\lambda 1)/n}{I_1(\lambda 2) + I_2(\lambda 2) + \ldots + I_n(\lambda 2)/n} \right).$$

## Revendications

1. Appareil photométrique de mesure de l'absorption lumineuse pour analyser un échantillon (30) contenu dans un récipient transparent (28), appareil qui comprend:

une source lumineuse (16) pour diriger des impulsions lumineuses intermittentes sur l'échantillon (30) contenu dans le récipient;

une alimentation électrique (18) pour pulser ladite source lumineuse;

caractérisé en ce qu'il comprend un dispositif spectroscopique (38) pour décomposer chaque impulsion, après qu'elle a traversé l'échantillon, en deux composantes ayant des longueurs d'onde différentes prédéterminées $(\lambda 1, \lambda 2 \ldots \lambda n)$;

un détecteur (40) qui engendre des signaux d'intensité (42) correspondant à chacune desdites composantes des impulsions lumineuses; et

une unité arithmétique (46) pour déterminer le taux d'absorption de l'échantillon en calculant, pour toutes les impulsions, la valeur moyenne de la différence entre lesdits signaux d'intensité desdites deux composantes de chacune desdites impulsions.

2. Appareil photométrique de mesure selon la revendication 1, caractérisé en ce que ladite source lumineuse est une lampe à arc.

3. Appareil photométrique de mesure selon la revendication 1, caractérisé en ce que ladite source lumineuse est une lampe-flash au xénon.

4. Appareil photométrique de mesure selon l'une quelconque des revendications précédentes, caractérisé en ce que ladite alimentation électrique est conçue pour activer ladite source lumineuse de façon intermittente plus de 15 fois.

5. Appareil photométrique de mesure selon la revendication 1, caractérisé en outre, en ce qu'il comprend:

un second détecteur (52) pour détecter les manques d'allumage de ladite source lumineuse et pour engendrer des signaux d'information indiquant ce fait; et en ce que

l'unité arithmétique (46) est conçue pour recevoir lesdites données d'information de l'intensité lumineuse et lesdites informations de défaut d'allumage et pour déterminer le taux d'absorption de l'échantillon en calculant la valeur moyenne de la différence d'intensités entre lesdites longueurs d'onde différentes, ladite unité arithmétique étant également conçue pour corriger les calculs de ladite valeur moyenne en excluant les données d'intensité produites pendant lesdits manques d'allumage.

6. Appareil d'analyse biochimique pour analyser des échantillons (30) contenus dans une série de récipients transparents (28) qui comprend un appareil de mesure d'absorption lumineuse tel que spécifié dans l'une quelconque des revendications précédentes, caractérisé en ce que le dispositif spectroscopique (38) et conçu pour séparer chaque faisceau lumineux intermittent ayant traversé ledit échantillon en deux composants 1 et 2 ayant deux longueurs d'onde différentes prédéterminées, chaque composante ainsi séparée ayant une intensité $I_1, I_2, \ldots I_n$ correspondant à chacune des impulsions de ladite source lumineuse, et en ce que les moyens de détection engendrent un signal correspondant à chacune desdites intensités $I_1(\lambda 1)$, $I_2(\lambda 1), \ldots I_n(\lambda 1)$ et $I_1(\lambda 2)$, $I_2(\lambda 2) \ldots, I_n(\lambda 2)$ des impulsions lumineuses transmises pour chacune desdites deux longueurs d'ondes prédéterminées 1 et 2, et

une unité arithmétique (46) qui reçoit lesdits signaux d'intensité lumineuse desdits moyens de détection et détermine le taux d'absorption de chacun desdits échantillons devant être analysés en calculant la valeur moyenne de la différence d'intensités lumineuses entre lesdites deux longueurs d'ondes prédéterminées en utilisant la relation suivante:

$$\frac{1}{n} \left( \log\frac{I_1(\lambda 1)}{I_1(\lambda 2)} + \log\frac{I_2(\lambda 1)}{I_2(\lambda 2)} + \ldots + \log\frac{I_n(\lambda 1)}{I_n(\lambda 2)} \right).$$

7. Appareil d'analyse biochimique pour analyser des échantillons (30) contenus dans une série de récipients transparents (28) comportant un appareil de mesure d'absorption lumineuse tel que spécifié dans l'une quelconque des revendications précédentes, caractérisé en ce que le dispositif spectroscopique (38) est conçu pour séparer chaque faisceau lumineux ayant traversé ledit échantillon en deux composantes 1 et 2 ayant deux longueurs d'onde différentes prédéterminées de sorte que chaque composante ainsi séparée a une intensité $I_1, I_2, \ldots I_n$ correspondant à chacune des impulsions de ladite source lumineuse, et en ce que le dispositif de détection (40) engendre un signal correspondant à chacune desdites intensités $I_1(\lambda 1)$, $I_2(\lambda 1), \ldots, I_n(\lambda 1)$ et $I_1(\lambda 2)$, $I_2(\lambda 2), \ldots, I_n(\lambda 2)$ des impulsions lumineuses intermittentes transmises pour chacune desdites deux longueurs d'onde prédéterminées 1 et 2; et

en ce que l'unité arithmétique (46) reçoit lesdits signaux d'intensité lumineuse dudit dispositif de détection et détermine le taux d'absorption de chacun des échantillons devant être analysés en calculant la valeur moyenne de la différence d'intensités lumineuses entre lesdites deux longueurs d'onde prédéterminées en utilisant la relation suivante:

$$\log \left( \frac{[I_1(\lambda 1) + I_2(\lambda 1) + \ldots + I_n(\lambda 1)]/n}{[I_1(\lambda 2) + I_2(\lambda 2) + \ldots + I_n(\lambda 2)]/n} \right).$$

FIG. I.

*Fig.2.*